# EUROPEAN PATENT APPLICATION

(11) **EP 4 722 676 A1**
(43) Date of publication of application: **08.04.2026**
(21) Application number: 25198273.2
(22) Date of filing: 26.08.2025
(51) Int. Cl.: G01M 5/00, G01N 3/20

(54) **SYSTEM AND METHOD FOR BENDING A TEST ARTICLE**

(30) Priority: 07.10.2024 US 202463704067 P; 04.04.2025 US 202519170130
(71) Applicant: The Boeing Company, Arlington, VA 22202 (US)
(72) Inventor: LEKOU, DIONYSIA, Arlington, 22202 (US); BOLD, JENS, Arlington, 22202 (US); SALIMI, FARID, Arlington, 22202 (US)
(74) Representative: Lissandrini, Marco

(57) **Abstract**

A system and a method include a lower support, an upper support, a first coupler connected to the lower support and the upper support at a first point of contact and a second point of contact, respectively, and a second coupler connected to the lower support and the upper support at a third point of contact and a fourth point of contact, respectively. The first coupler and the second coupler are configured to retain a test article therebetween.

## Description

This application relates to and claims priority benefits from United States Provisional Patent Application No. 63/704,067, filed October 7, 2024, as well as from United Staes Non Provisional Patent Application No. 19/170,130, filed April 4, 2025.

### FIELD OF THE DISCLOSURE

Examples of the present disclosure generally relate to a system and a method for bend testing a structure, and more particularly to a 4 (four) point support assembly for supporting the structure during a test.

### BACKGROUND OF THE DISCLOSURE

Before various systems are manufactured, portions thereof may be tested to determine abilities to withstand forces. For example, a portion of a structural beam can be tested. Typically, a test article is loaded in relation to a combination of bending and shear loads.

However, measurements of bending strength can be masked by the influence of shear loading. Particularly for a composite test article, structural failure can be induced in an area of combined shear loading and bending, due to the sensitivity of the composite test article in relation to shear forces.

### SUMMARY OF THE DISCLOSURE

A need exists for a system and a method for effectively and efficiently testing bending strength of a structure, such as a composite test article. Further, a need exists for maintaining the structural integrity of the test article during the testing.

With those needs in mind, certain examples of the present disclosure provide a system including a lower support, an upper support, a first coupler connected to the lower support and the upper support at a first point of contact and a second point of contact, respectively, and a second coupler connected to the lower support and the upper support at a third point of contact and a fourth point of contact, respectively. The first coupler and the second coupler are configured to retain a test article therebetween. In at least one example, the lower support and the upper support are not configured to contact the test article.

In at least one example, the first contact point, the second contact point, the third contact point, and the fourth contact point are outboard in relation to the test article.

In at least one example, the lower support includes a lower base panel, a first lower contact coupled to the lower base panel, and a second lower contact coupled to the lower base panel. The upper support includes an upper base panel, a first upper contact coupled to the upper base panel, and a second upper contact coupled to the upper base panel. The first lower contact provides the first point of contact, the first upper contact provides the second point of contact, the second lower contact provides the third point of contact, and the second upper contact provides the fourth point of contact.

As a further example, the lower support includes first rails that adjustably support the first lower contact and the second lower contact on the lower base panel. The upper support includes second rails that adjustably support the first upper contact and the second upper contact on the upper base panel.

In at least one example, each of the first lower contact, the second lower contact, the first upper contact, and the second upper contact comprises a contact bar retained by opposed tabs.

In at least one example, the system also includes one or more adapters. One or both of the first coupler and the second coupler is configured to secure to the test article through the one or more adapters. As a further example, the one or more adapters include one or more protuberances that are configured to limit a depth of insertion of the one or more adapters into the test article.

In at least one example, the system also includes one or more clamps. One or both of the first coupler and the second coupler is configured to secure to the test article through the one or more clamps.

In at least one example, a load actuator configured to exert a force into the upper support. One or more force sensors configured to be coupled to the test article.

Certain examples of the present disclosure provide a method including connecting a first coupler connected to a lower support and an upper support at a first point of contact and a second point of contact, respectively; connecting a second coupler to the lower support and the upper support at a third point of contact and a fourth point of contact, respectively; and retaining a test article between the first coupler and the second coupler.

### BRIEF DESCRIPTION OF THE DRAWINGS

Figure 1 illustrates a block diagram of a system, according to an example of the present disclosure.
Figure 2 illustrates an isometric front view of a test article, according to an example of the present disclosure.
Figure 3 illustrates an isometric front view of the system, according to an example of the present disclosure.
Figure 4 illustrates a front view of the system of Figure 3.
Figure 5 illustrates an isometric partially exploded view of an end of a test article in relation to an adapter, according to an example of the present disclosure.
Figure 6 illustrates an isometric front view of the end of the test article secured to a coupler, according to an example of the present disclosure.
Figure 7 illustrates a schematic block diagram of a control unit, according to an example of the present disclosure.
Figure 8 illustrates a flow chart of a method, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

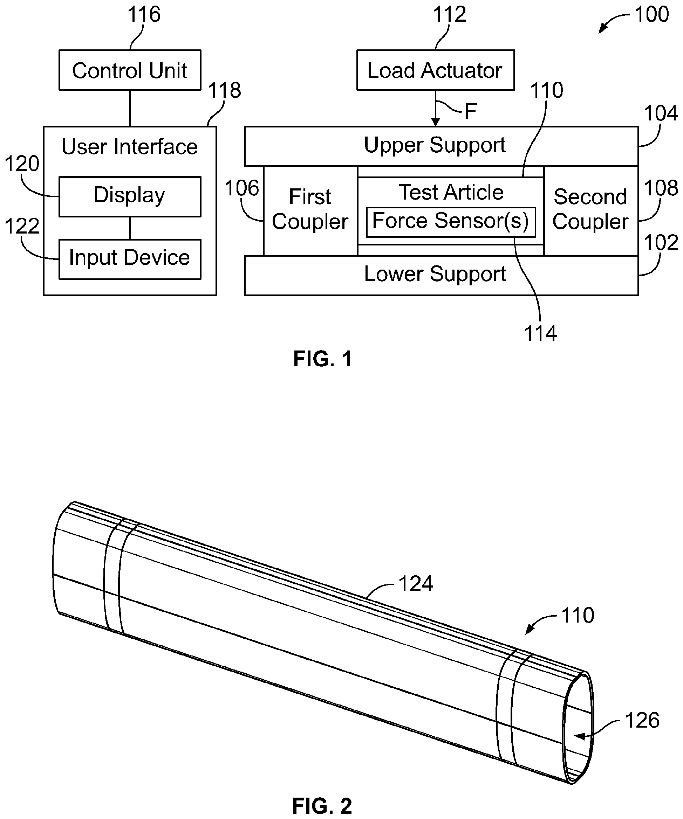

Figure 1 illustrates a block diagram of a system 100, according to an example of the present disclosure. The system 100 includes a lower support 102 and an upper support 104. The lower support 102 and the upper support 104 connect to a first coupler 106 and a second coupler 108. The first coupler 106 and the second coupler 108 cooperate to hold a test article 110. For example, the first coupler 106 and the second coupler 108 suspend the test article 110 therebetween. The lower support 102 and the upper support 104 directly contact the first coupler 106 and the second coupler 108. However, the lower support 102 and the upper support 104 do not contact the test article 110.

A load actuator 112 is configured to exert a force F into the upper support 104. The load actuator 112 can include one or more of a cylinder, a piston, a press, and/or the like. The load actuator 112 can be hydraulically, pneumatically, or electrically driven to exert the force F into the upper support 104.

In at least one example, the test article 110 is a composite structure. For example, the test article 110 can include carbon reinforced fibers, epoxy, a laminate, and/or the like. The test article 110 can include a honeycomb core laminated to outer skins. As another example, the test article 110 can include glass and epoxy. As another example, the test article 110 can include one or more metals.

In at least one example, one or more force sensors 114 are configured to detect forces exerted into the test article 110. The force sensor(s) 114 can be directly coupled to the test article 110. As an example, the force sensor(s) 114 can be strain gage(s). Optionally, the system 100 may not include force sensors coupled to the test article 110.

In at least one example, a control unit 116 is in communication with the force sensor(s) 114, such as through one or more wired or wireless connections. The control unit 116 receives signals from the force sensor(s) 114 indicative of the forces exerted into the test article 110. As a further example, the control unit 116 can also be in communication with the load actuator 112, such as through one or more wired or wireless connections. The control unit 116 can be configured to control operation of the load actuator 112. Further, the control unit 116 can receive signals from the load actuator 112 indicative of the force F exerted into the upper support 104.

As a further example, the control unit 116 is also in communication with a user interface 118, such as through one or more wired or wireless connections. The user interface 118 includes a display 120 (for example, an electronic monitor, television, touchscreen, or the like) and an input device 122 (such as a keyboard, a mouse, a stylus, a touchscreen interface, and/or the like). As an example, the user interface 118 can be a computer workstation, a handheld smart device, and/or the like, and which can be within a vehicle. Optionally, the system 100 may not include the control unit 116 and/or the user interface 118.

In operation, in order to perform a test on the test article 110, the load actuator 112 is operated to exert the force F into the upper support 104. The force F is translated to the first coupler 106 and the second coupler 108, as such components are directly coupled to the upper support 104. Because the test article 110 is suspended between the first coupler 106 and the second coupler 108, bending forces are translated into the test article 110. The force sensor(s) 114 detects the forces exerted into the test article 110, and output a signal (indicative of the detected forces) to the control unit 116. The control unit 116 can then output a signal to the user interface 118 to show the detected forces on the display 120.

The system 100 described herein is configured to minimize or otherwise reduce destruction of the test article 110 during stress testing. In particular, prior known testing systems directly apply forces on at least two contact points of a test structure. As such, during stress testing, the test structure has a tendency to fail at such contact points. (due to buildup of localized stress/shear loading), thereby interfering with the stress test. In contrast, the system 100 and methods described herein eliminate, minimize, or otherwise reduce localized damage of the test article 110 by moving the contact points away from the test article 110 (such as to the first coupler 106 and the second coupler 108), which allows pure bending to be introduced in the test article 110, and eliminates, minimizes, or otherwise reduces shear loading in relation to the test article 110. Actual bending stiffness and strength of the test article 110 can be measured without the effect of shear loading.

As described herein, the system 100 for testing the test article 110 includes the lower support 102, the upper support 104, the first coupler 106 connected to the lower support 102 and the upper support 104 at a first point of contact and a second point of contact, respectively, and the second coupler 108 connected to the lower support 102 and the upper support 104 at a third point of contact and a fourth point of contact, respectively. The first coupler 106 and the second coupler 108 are configured to retain the test article 110 therebetween. In at least one example, the lower support 102 and the upper support 104 are not configured to contact the test article 110. That is, the points of contact are not with respect to the test article 110.

Figure 2 illustrates an isometric front view of a test article 110, according to an example of the present disclosure. In at least one example, the test article 110 is a composite structure. The test article 110 includes a main body 124, which can be a linear beam. The test article 110 can be hollow, such that the main body 124 defines a central longitudinal channel 126 extending therethrough.

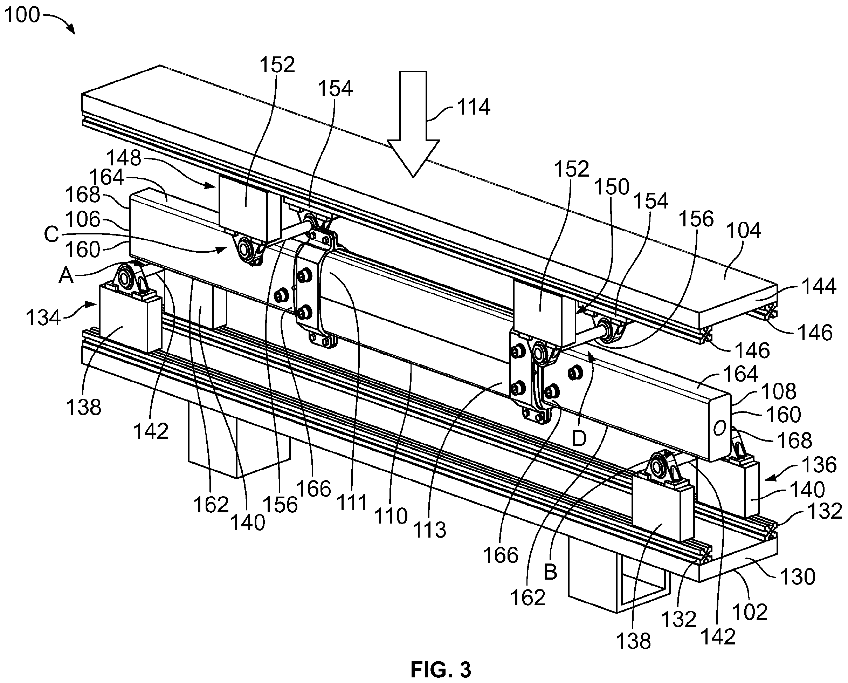

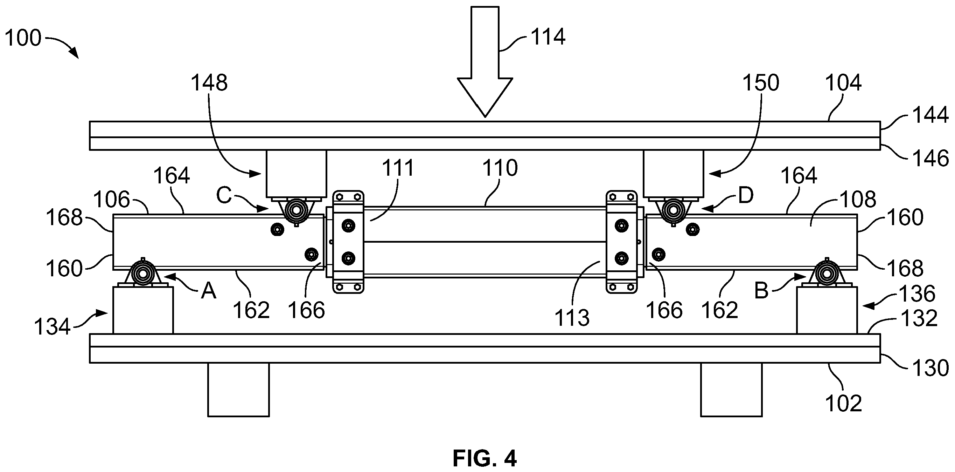

Figure 3 illustrates an isometric front view of the system 100, according to an example of the present disclosure. Figure 4 illustrates a front view of the system 100 of Figure 3. Referring to Figures 3 and 4, the lower support 102 includes a base panel 130 (for example, a lower base panel), which can support rails 132. The rails 132 support a first lower contact 134 and a second lower contact 136. The first lower contact 134 and the second lower contact 136 are adjustably moveable on the rails 132. For example, the rails 132 allow the first lower contact 134 and the second lower contact 136 to be slidably adjusted along a length of the base panel 130. In this manner, the rails 132 adjustably support the first lower contact 134 and the second lower contact 136 on the base panel 130. Optionally, the lower support 102 may not include the rails 132. Instead, the first lower contact 134 and the second lower contact 136 can be fixed in position on the base panel 130. Each of the first lower contact 134 and the second lower contact 136 includes opposed tabs 138 and 140 that retain a contact bar 142 therebetween.

Similarly, the upper support 104 includes a base panel 144 (for example, an upper base panel), which can support rails 146. The rails 146 support a first upper contact 148 and a second upper contact 150. The first upper contact 148 and the second upper contact 150 are adjustably moveable on the rails 146. For example, the rails 146 allow the first upper contact 148 and the second upper contact 150 to be slidably adjusted along a length of the base panel 144. In this manner, the rails 146 adjustably support the first upper contact 148 and the second upper contact 150 on the base panel 144. Optionally, the upper support 104 may not include the rails 146. Instead, the first upper contact 148 and the second upper contact 150 can be fixed in position on the base panel 144. Each of the first upper contact 148 and the second upper contact 150 includes opposed tabs 152 and 154 that retain a contact bar 156 therebetween.

Each of the first coupler 106 and the second coupler 108 includes a beam 160 having a lower surface 162 and an upper surface 164 opposite from the lower surface 162. The beam 160 also includes an inboard end 166 opposite from an outboard end 168.

The first coupler 106 and the second coupler 108 retain the test article 110 between respective inboard ends 166. That is, opposite ends 111 and 113 of the test article 110 are secured to the inboard ends 166 of the first coupler 106 and the second coupler 108. In at least one example, the ends 111 and 113 of the test article 110 are secured to the first coupler 106 and the second coupler 108, respectively, through one or more fasteners, adhesives, adapters, and/or the like.

The lower support 102 directly contacts the first coupler 106 at a point of contact A. In particular, the contact bar 142 of the first lower contact 134 directly contacts the lower surface 162 of the first coupler 106. The lower support 102 directly contacts the second coupler 108 at a point of contact B. In particular, the contact bar 142 of the second lower contact 136 directly contacts the lower surface 162 of the second coupler 108. The upper support 104 directly contact the first coupler 106 at a point of contact C. In particular, the contact bar 156 of the first upper contact 148 directly contacts the upper surface 164 of the first coupler 106. The upper support 104 directly contacts the second coupler 108 at a point of contact D. In particular, the contact bar 156 of the second upper contact 150 directly contacts the upper surface 164 of the second coupler 108. In this manner, the system 100 provides four points of contact A, B, C, and D with respect to the first coupler 106 and the second coupler 108. However, the first lower contact 134, the second lower contact 136, the first upper contact 148, and the second upper contact 150 do not directly contact the test article 110. Instead, as shown and described, the points of contact A, B, C, and D are outboard from (that is outwardly away from) the test article 110.

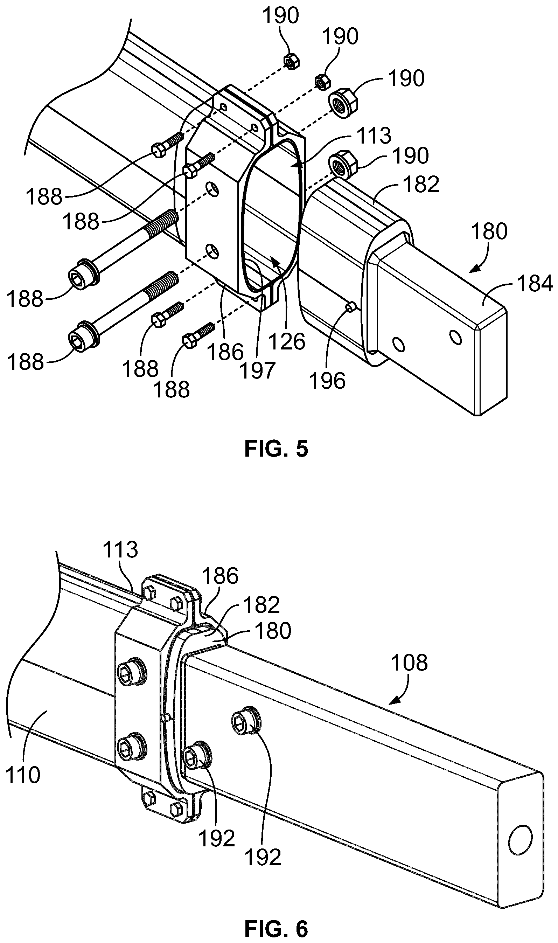

Figure 5 illustrates an isometric partially exploded view of the end 113 of the test article 110 in relation to an adapter 180, according to an example of the present disclosure. The adapter 180 includes an expanded head 182 connected to a stem 184. The head 182 is configured to be inserted (for example, plugged) into the channel 126 of the test article 110 at the end 113. A clamp 186 is secured around an outer surface of the test article 110 at the end 113. One or more fasteners 188 (such as bolts or screws) and nuts 190 are used to secure the clamp 186 in place, and securely compress the head 182 within the end 111. In at least one example, the end 111 (shown in Figures 3 and 4) of the test article 110 is secured to another adapter in the same fashion.

In at least one example, the adapter 180 provides an intermediary structure that further isolates the test article 110 from experiencing shear forces. That is, the adapter 180 is configured to ensure that forces exerted into the test article 110 are bending forces (and not shear forces).

Figure 6 illustrates an isometric front view of the end 113 of the test article 110 secured to the second coupler 108, according to an example of the present disclosure. One or more fasteners 192 (such as bolts or screws) and nuts (not shown) are used to secure the second coupler 108 (shown in Figures 3 and 4) to the stem 184 (shown in Figure 5) of the adapter 180, which is inserted into an end of the second coupler 108. In at least one example, the first coupler 106 (shown in Figures 3 and 4) is secured to the opposite end 111 (shown in Figures 3 and 4) of the test article 110 in the same fashion.

Referring to Figures 5 and 6, the adapter 180 can also include a protuberance 196, such as a post, barb, or the like extending outwardly therefrom. The protuberance 196 acts as a stop that prevents the head 182 from being exerted too deep into the channel 126. That is, the protuberance 196 limits a depth of insertion of the adapter 180 into the test article 110. The protuberance 196 abuts against an edge 197 of the test article 110, thereby preventing the protuberance 196 from passing into the channel 126 (and thereby preventing deeper insertion of the head 182). Optionally, the adapter 180 may not include the protuberance 196.

Referring to Figures 3-6, optionally, the test article 110 can be secured to the first coupler 106 and the second coupler 108 without the clamps, and with more or fewer fasteners, nuts, and/or the like than shown. In at least one example, the test article 110 can be secured to the adapter 180 with adhesives, instead of separate fasteners. As another example, the test article 110 can be directly secured to first coupler 106 and the second coupler 108 without adapters.

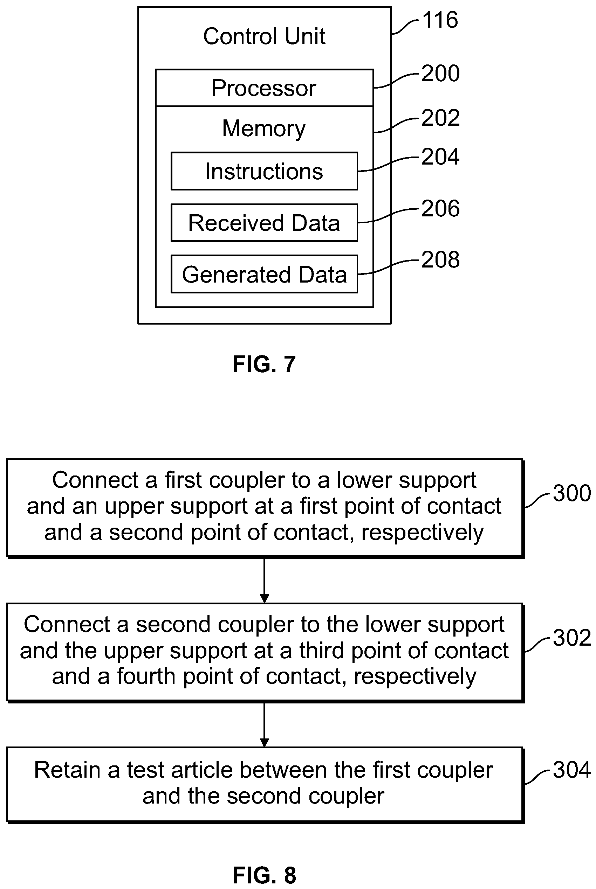

Figure 7 illustrates a schematic block diagram of the control unit 116, according to an example of the present disclosure. In at least one example, the control unit 116 includes at least one processor 200 in communication with a memory 202. The memory 202 stores instructions 204, received data 206, and generated data 208. The control unit 116 shown in Figure 7 is merely exemplary, and non-limiting.

As used herein, the term "control unit," "central processing unit," "CPU," "computer," or the like may include any processor-based or microprocessor-based system including systems using microcontrollers, reduced instruction set computers (RISC), application specific integrated circuits (ASICs), field programmable gate arrays (FPGAs), logic circuits, and any other circuit or processor including hardware, software, or a combination thereof capable of executing the functions described herein. Such are exemplary only, and are thus not intended to limit in any way the definition and/or meaning of such terms. For example, the control unit 116 may be or include one or more processors that are configured to control operation, as described herein.

The control unit 116 is configured to execute a set of instructions that are stored in one or more data storage units or elements (such as one or more memories), in order to process data. For example, the control unit 116 may include or be coupled to one or more memories. The data storage units may also store data or other information as desired or needed. The data storage units may be in the form of an information source or a physical memory element within a processing machine.

The set of instructions may include various commands that instruct the control unit 116 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 116. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 116 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

Figure 8 illustrates a flow chart of a method, according to an example of the present disclosure. Referring to Figures 1-8, at 300, the first coupler 106 is connected to the lower support 102 and the upper support 104 at a first point of contact (such as the contact point A) and a second point of contact (such as the contact point C), respectively. At 302, the second coupler 108 is connected to the lower support 102 and the upper support 104 at a third point of contact (such as the contact point B) and a fourth point of contact (such as the contact point D), respectively. At 304, the test article 110 is retained by and between the first coupler 106 and the second coupler 108. As an example, the test article 110 is suspended between the first coupler 106 and the second coupler 108. The lower support 102 and the upper support 104 do not contact the test article 110. Instead, the points of contact are outboard (that is, away from) the test article 110.

Further, the disclosure comprises examples according to the following clauses:

Clause 1. A system comprising:
a lower support;
an upper support;
a first coupler connected to the lower support and the upper support at a first point of contact and a second point of contact, respectively; and
a second coupler connected to the lower support and the upper support at a third point of contact and a fourth point of contact, respectively,
wherein the first coupler and the second coupler are configured to retain a test article therebetween.

Clause 2. The system of Clause 1, wherein the lower support and the upper support are not configured to contact the test article.

Clause 3. The system of Clauses 1 or 2, wherein the first contact point, the second contact point, the third contact point, and the fourth contact point are outboard in relation to the test article.

Clause 4. The system of any of Clauses 1-3, wherein the lower support comprises a lower base panel, a first lower contact coupled to the lower base panel, and a second lower contact coupled to the lower base panel, wherein the upper support comprises an upper base panel, a first upper contact coupled to the upper base panel, and a second upper contact coupled to the upper base panel, and wherein the first lower contact provides the first point of contact, the first upper contact provides the second point of contact, the second lower contact provides the third point of contact, and the second upper contact provides the fourth point of contact.

Clause 5. The system of Clause 4, wherein the lower support comprises first rails that adjustably support the first lower contact and the second lower contact on the lower base panel, and wherein the upper support comprises second rails that adjustably support the first upper contact and the second upper contact on the upper base panel.

Clause 6. The system of Clauses 4 or 5, wherein each of the first lower contact, the second lower contact, the first upper contact, and the second upper contact comprises a contact bar retained by opposed tabs.

Clause 7. The system of any of Clauses 1-6, further comprising one or more adapters, wherein one or both of the first coupler and the second coupler is configured to secure to the test article through the one or more adapters.

Clause 8. The system of Clause 7, wherein the one or more adapters comprise one or more protuberances that are configured to limit a depth of insertion of the one or more adapters into the test article.

Clause 9. The system of any of Clauses 1-8, further comprising one or more clamps, wherein one or both of the first coupler and the second coupler is configured to secure to the test article through the one or more clamps.

Clause 10. The system of any of Clauses 1-9, further comprising a load actuator configured to exert a force into the upper support.

Clause 11. The system of any of Clauses 1-10, further comprising one or more force sensors configured to be coupled to the test article.

Clause 12. A method comprising:
connecting a first coupler connected to a lower support and an upper support at a first point of contact and a second point of contact, respectively;
connecting a second coupler to the lower support and the upper support at a third point of contact and a fourth point of contact, respectively; and
retaining a test article between the first coupler and the second coupler.

Clause 13. The method of Clause 12, wherein the lower support and the upper support do not contact the test article.

Clause 14. A system comprising:
a test article;
a lower support including a lower base panel, a first lower contact coupled to the lower base panel, and a second lower contact coupled to the lower base panel;
an upper support including an upper base panel, a first upper contact coupled to the upper base panel, and a second upper contact coupled to the upper base panel;
a first coupler connected to the lower support and the upper support at a first point of contact and a second point of contact, respectively, wherein the first lower contact provides the first point of contact, and the first upper contact provides the second point of contact; and
a second coupler connected to the lower support and the upper support at a third point of contact and a fourth point of contact, respectively, wherein the second lower contact provides the third point of contact, and the second upper contact provides the fourth point of contact,
wherein the first coupler and the second coupler retain the test article therebetween, wherein the lower support and the upper support do not contact the test article.

Clause 15. The system of Clause 14, wherein the first contact point, the second contact point, the third contact point, and the fourth contact point are outboard from the test article.

Clause 16. The system of Clauses 14 or 15, wherein the lower support further comprises first rails that adjustably support the first lower contact and the second lower contact on the lower base panel, and wherein the upper support comprises second rails that adjustably support the first upper contact and the second upper contact on the upper base panel.

Clause 17. The system of any of Clauses 14-16, wherein each of the first lower contact, the second lower contact, the first upper contact, and the second upper contact comprises a contact bar retained by opposed tabs.

Clause 18. The system of any of Clauses 14-17, further comprising:
one or more adapters, wherein one or both of the first coupler and the second coupler secure to the test article through the one or more adapters, wherein the one or more adapters include one or more protuberances that limit a depth of insertion of the one or more adapters into the test article; and
one or more clamps, wherein one or both of the first coupler and the second coupler secure to the test article through the one or more clamps.

Clause 19. The system of any of Clauses 14-18, further comprising a load actuator configured to exert a force into the upper support.

Clause 20. The system of any of Clauses 14-19, further comprising one or more force sensors coupled to the test article.

As described herein, examples of the present disclosure provide a system and a method for effectively and efficiently testing bending strength of a structure, such as a composite test article. Additionally, examples of the present disclosure provide systems and methods that maintain the structural integrity of the test article during the testing.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a lower support (102);
an upper support (104);
a first coupler (106) connected to the lower support (102) and the upper support (104) at a first point of contact and a second point of contact, respectively; and
a second coupler (108) connected to the lower support (102) and the upper support (104) at a third point of contact and a fourth point of contact, respectively,
wherein the first coupler (106) and the second coupler (108) are configured to retain a test article (110) therebetween.

2. The system (100) of claim 1, wherein the lower support (102) and the upper support (104) are not configured to contact the test article (110).

3. The system (100) of claim 1 or 2, wherein the first contact point, the second contact point, the third contact point, and the fourth contact point are configured to be located outboard in relation to the test article (110).

4. The system (100) of any one of claims 1 to 3, wherein the lower support (102) comprises a lower base panel (130, 144), a first lower contact (134) coupled to the lower base panel (130, 144), and a second lower contact (136) coupled to the lower base panel (130, 144), wherein the upper support (104) comprises an upper base panel (130, 144), a first upper contact (148) coupled to the upper base panel (130, 144), and a second upper contact (150) coupled to the upper base panel (130, 144), and wherein the first lower contact (134) provides the first point of contact, the first upper contact (148) provides the second point of contact, the second lower contact (136) provides the third point of contact, and the second upper contact (150) provides the fourth point of contact.

5. The system (100) of claim 4, wherein the lower support (102) comprises first rails (132, 146) that adjustably support the first lower contact (134) and the second lower contact (136) on the lower base panel (130, 144), and wherein the upper support (104) comprises second rails (132, 146) that adjustably support the first upper contact (148) and the second upper contact (150) on the upper base panel (130, 144).

6. The system (100) of claim 4 or 5, wherein each of the first lower contact (134), the second lower contact (136), the first upper contact (148), and the second upper contact (150) comprises a contact bar (142) retained by opposed tabs (138, 140,152).

7. The system (100) of any one of claims 1 to 6, further comprising one or more adapters (180), wherein one or both of the first coupler (106) and the second coupler (108) is configured to secure to the test article (110) through the one or more adapters (180).

8. The system (100) of claim 7, wherein the one or more adapters (180) comprise one or more protuberances (196) that are configured to limit a depth of insertion of the one or more adapters (180) into the test article (110).

9. The system (100) of any one of claims 1 to 8, further comprising one or more clamps, wherein one or both of the first coupler (106) and the second coupler (108) is configured to secure to the test article (110) through the one or more clamps.

10. The system (100) of any one of claims 1 to 9, further comprising a load actuator (112) configured to exert a force into the upper support (104).

11. The system (100) of any one of claims 1 to 10, further comprising a test article (110), preferably wherein the test article (110) includes a hollow main body (124) that defines a central longitudinal channel (126) extending therethrough.

12. The system (100) of any one of claims 1 to 11, further comprising one or more force sensors (114) configured to be coupled to the test article (110).

13. A method comprising:
connecting a first coupler (106) connected to a lower support (102) and an upper support (104) at a first point of contact and a second point of contact, respectively;
connecting a second coupler (108) to the lower support (102) and the upper support (104) at a third point of contact and a fourth point of contact, respectively; and
retaining a test article (110) between the first coupler (106) and the second coupler (108).

14. The method of claim 13, wherein the lower support (102) and the upper support (104) do not contact the test article (110).

15. The method of claim 13 or 14, further comprising exerting a force into the upper support (104).
